# EUROPEAN PATENT APPLICATION

(11) **EP 1 950 453 A2**
(43) Date of publication of application: **30.07.2008**
(21) Application number: 08100800.5
(22) Date of filing: 23.01.2008
(51) Int. Cl.: F16H 1/28, F16H 57/08

(54) **Epicyclic gear mechanism**

(30) Priority: 25.01.2007 JP 2007015273
(71) Applicant: Sankyo Seisakusho Co., Tokyo (JP)
(72) Inventor: Kato, Heizaburo, Kikugawa-shi Shizuoka 1434-1 (JP)
(74) Representative: Kahlhöfer, Hermann

(57) **Abstract**

An epicyclic gear mechanism (10) includes: a sun gear (20); a ring gear (30) positioned outside of the sun gear, with respect to a radial direction of the sun gear; a plurality of planet gears (40) positioned between the sun gear and the ring gear with respect to the radial direction, each of the plurality of planet gears meshing with the sun gear and the ring gear; a carrier (50) rotatably supporting the plurality of planet gears, the carrier having a first carrier section (52) supporting at least one planet gear of the plurality of planet gears, and a second carrier section (56) supporting another at least one planet gear that is different from the at least one planet gear and an adjustment member (60) for adjusting a relative positional relationship in a circumferential direction between the first carrier section and the second carrier section.

## Description

### CROSS-REFERENCE TO RELATED APPLICATIONS

The present application claims priority upon Japanese Patent Application No. 2007-15273 filed on January 25, 2007, which is herein incorporated by reference.

### BACKGROUND

### Technical Field

The present invention relates to epicyclic gear mechanisms.

### Related Art

Epicyclic gear mechanisms, which are used as step-up or step-down mechanisms and the like in various kinds of apparatuses are already well known. Such an epicyclic gear mechanism has a sun gear, a ring gear that is positioned outside of the sun gear in a radial direction, a plurality of planet gears positioned between the sun gear and the ring gear in the radial direction, each of the plurality of planet gears meshing with the sun gear and the ring gear, and a carrier rotatively supporting the plurality of planet gears (see for example JP-A-7-158701).

In the epicyclic gear mechanisms, so-called backlash (play between the teeth faces of two gears) may occur at the parts where the sun gear meshes with the planet gears and where the planet gears mesh with the ring gear. And due to such a backlash, the problem occurs that it is not possible to control exactly (with high accuracy) the rotational position of an output member attached to the epicyclic gear mechanism, of a device provided with the epicyclic gear mechanism, for example. And due to such a problem, a harmful effect occurs such that the output member cannot be accurately positioned.

### SUMMARY

The present invention has been contrived in view of the above issues, and it is an object thereof to realize an epicyclic gear mechanism that appropriately allows for high accuracy of a device.

A main aspect of the present invention is an epicyclic gear mechanism including:
a sun gear;
a ring gear positioned outside of the sun gear, with respect to a radial direction of the sun gear;
a plurality of planet gears positioned between the sun gear and the ring gear with respect to the radial direction, each of the plurality of planet gears meshing with the sun gear and the ring gear;
a carrier rotatably supporting the plurality of planet gears, the carrier having a first carrier section supporting at least one planet gear of the plurality of planet gears, and a second carrier section supporting another at least one planet gear that is different from the at least one planet gear; and
an adjustment member for adjusting a relative positional relationship in a circumferential direction between the first carrier section and the second carrier section..

Other features of the present invention will become clear from the description of the present specification and the accompanying drawings.

### BRIEF DESCRIPTION OF THE DRAWINGS

For a more complete understanding of the present invention and the advantages thereof, reference is now made to the following description taken in conjunction with the accompanying drawings wherein:
Fig. 1 is a schematic diagram of an epicyclic gear mechanism 10 according to the present embodiment;
Fig. 2 is a schematic cross-sectional view taken along line A-A in Fig. 1;
Fig. 3 is a schematic cross-sectional view taken along line B-B in Fig. 1;
Fig. 4 is a schematic diagram showing the state of the epicyclic gear mechanism 10 prior to the adjustment; and
Fig.. 5 is a schematic diagram showing the state of the epicyclic gear mechanism 10 after the adjustment.

### DESCRIPTION OF EXEMPLARY EMBODIMENTS

At least the following matters will be made clear by the explanation in the present specification and the description of the accompanying drawings.

An epicyclic gear mechanism including:
a sun gear;
a ring gear positioned outside of the sun gear, with respect to a radial direction of the sun gear;
a plurality of planet gears positioned between the sun gear and the ring gear with respect to the radial direction, each of the plurality of planet gears meshing with the sun gear and the ring gear;
a carrier rotatably supporting the plurality of planet gears, the carrier having a first carrier section supporting at least one planet gear of the plurality of planet gears, and a second carrier section supporting another at least one planet gear that is different from the at least one planet gear; and
an adjustment member for adjusting a relative positional relationship in a circumferential direction between the first carrier section and the second carrier section..

In this way, it is possible to realize an epicyclic gear mechanism that appropriately allows for high accuracy of a device..

Further, it is possible that in an epicyclic gear mechanism, as the plurality of planet gears, at least four planet gears are included, the four planet gears being a first planet gear, a second planet gear, a third planet gear, and a fourth planet gear, the four planet gears being arranged in the order of the first planet gear, the second planet gear, the third planet gear, and the fourth planet gear along the circumferential direction, the first planet gear and the third planet gear being supported by the first carrier section, the second planet gear and the fourth planet gear being supported by the second carrier section..

In such a case, the problem that the rotational position of the output member cannot be controlled exactly (with high accuracy) can be solved more reliably..

Further, the epicyclic gear mechanism is possible
wherein, as the plurality of planet gears, only the four planet gears are included, the four planet gears being the first planet gear, the second planet gear, the third planet gear, and the fourth planet gear,
wherein the first carrier section includes
a first planet gear support section arranged at a front side with respect to a direction from the first planet gear to the third planet gear,
a third planet gear support section arranged at a back side with respect to that direction, and
a depression arranged between the first planet gear support section and the third planet gear support section with respect to that direction, the depression accommodating the second carrier section that supports the second planet gear and the fourth planet gear.

In such a case, the configuration regarding the first carrier section and the second carrier section of the epicyclic gear mechanism is simplified.

Further, the epicyclic gear mechanism is possible
wherein the adjustment member is a screw that is provided extending across the first carrier section and the second carrier section,
wherein the first carrier section and the second carrier section are moved in the circumferential direction by the screw being tightened..

In this case, a user can easily perform the adjustment.

Further, the epicyclic gear mechanism is possible
wherein, as the screw, a first screw that is positioned between the first planet gear and the second planet gear in the circumferential direction, and a second screw that is positioned between the third planet gear and the fourth planet gear in the circumferential direction are included,
wherein the first carrier section and the second carrier section as well as the first planet gear and the second planet gear are moved toward each other in the circumferential direction by the first screw being tightened, and
wherein the first carrier section and the second carrier section as well as the third planet gear and the fourth planet gear are moved toward each other in the circumferential direction by the second screw being tightened..

In this case, a fine adjustment becomes possible.

### Configuration Example of the Epicyclic Gear Mechanism 10

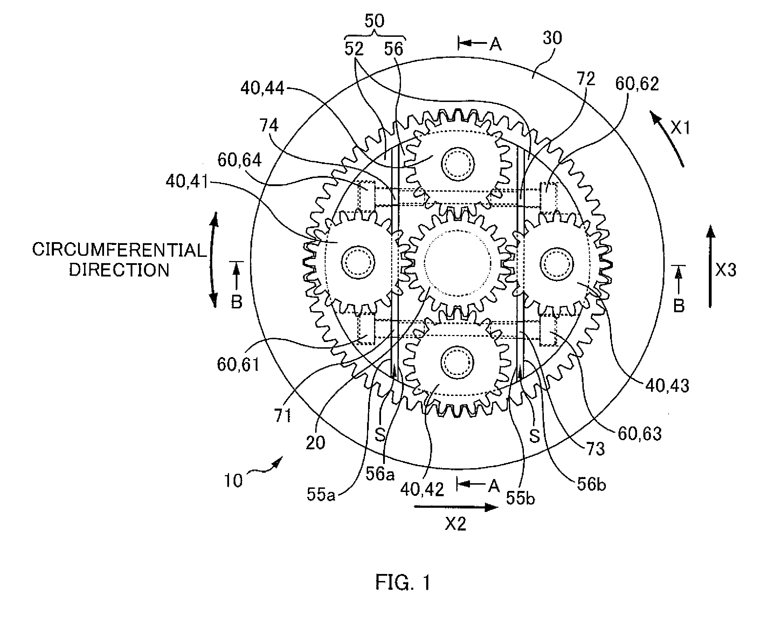

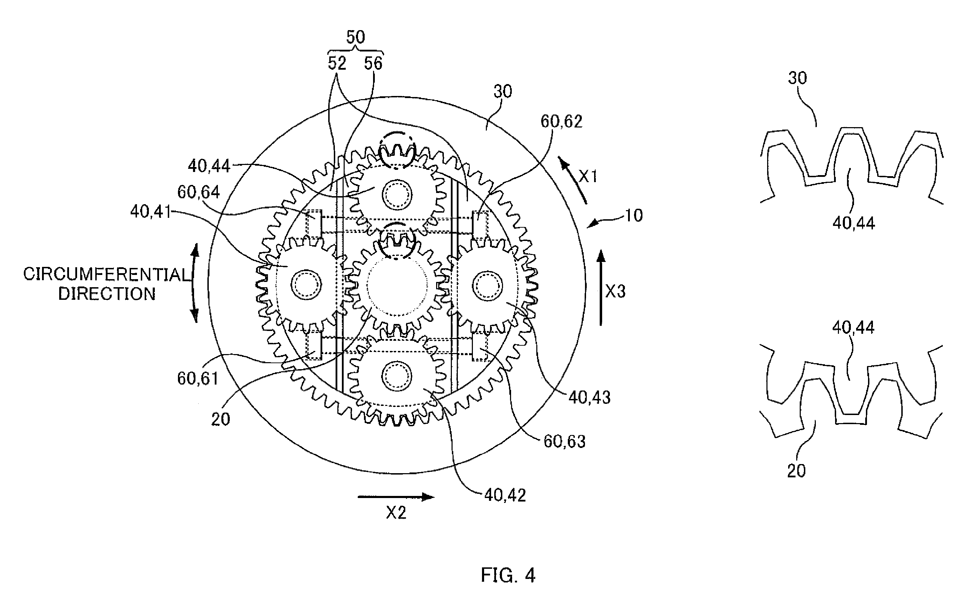

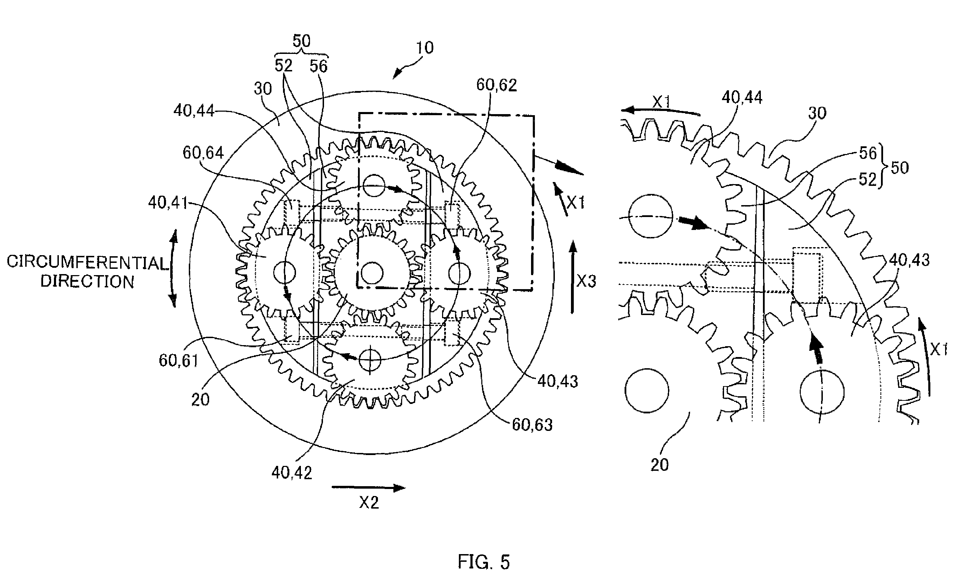

Referring to Figs. 1 to 5, the following is an explanation of a configuration example of an epicyclic gear mechanism 10. Fig. 1 is a schematic diagram of the epicyclic gear mechanism 10 according to the present embodiment. Fig.. 2 is a schematic cross-sectional view taken along the line A-A of Fig.. 1. Fig...3 is a schematic cross-sectional view taken along the line B-B of Fig. 1. Figs. 4 and 5 are explained further below. It should be noted that in the following, the direction from the center of the epicyclic gear mechanism 10 toward the outside in Fig.1 is referred to as a "radial direction", and the direction along the circumference of the epicyclic gear mechanism 10 in Fig.. 1 is referred to as a "circumferential direction.."

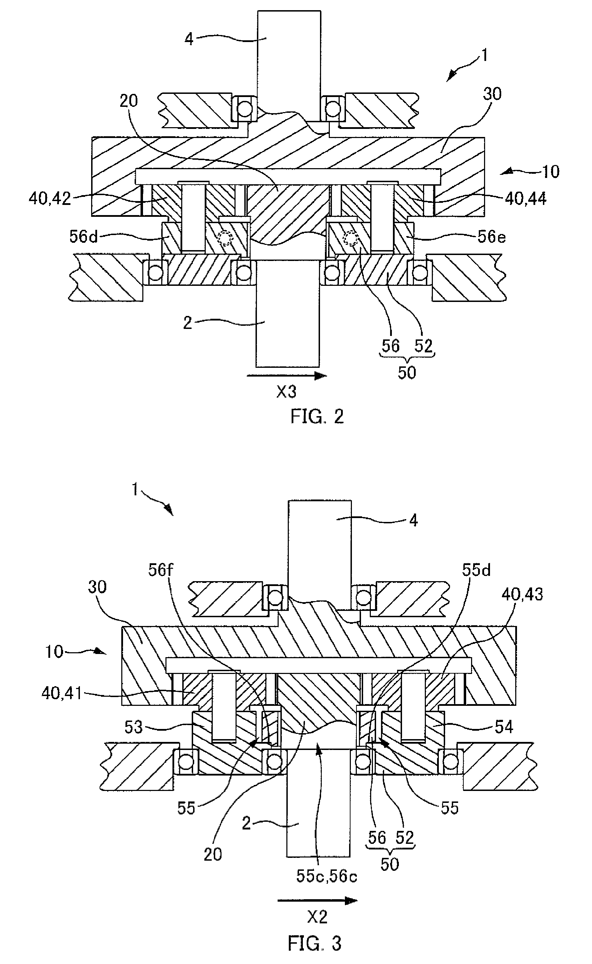

The epicyclic gear mechanism 10 is provided with a sun gear 20, a ring gear 30, planet gears 40, a carrier 50, and screws 60 (more specifically bolts), as an example of adjustment members.. As shown in Figs 2 and 3, in the present embodiment, an input shaft 2 and an output shaft 4 which are rotatable are attached to the epicyclic gear mechanism 10 by sandwiching it therebetween, (hereinafter, a device including the input shaft 2, the output shaft 4 and the epicyclic gear mechanism 10 is referred to as "a device provided with the epicyclic gear mechanism", simply, "a device 1" in an abbreviation). And a rotational force of the input shaft 2 which is rotatively driven by a motor not shown is transmitted to the output shaft 4 via the epicyclic gear mechanism 10, thus rotating the output shaft 4.

More specifically, in the device 1 according to this embodiment, the input shaft 2 is attached to the sun gear 20, and the output shaft 4 is attached to the ring gear 30. The sun gear 20 and the ring gear 30 are rotatable in the circumferential direction, whereas the carrier 50 is not rotatable in the circumferential direction. That is to say, among so-called planetary type (the type in which the ring gear is not rotatable), solar type (the type of which the sun gear is not rotatable) and star type (the type in which the carrier is not rotatable), the epicyclic gear mechanism 10 in the device 1 according to this embodiment has the star type configuration.

As shown in Fig. 1, the sun gear 20 is located at the most inner side in the radial direction (that is, the center portion of the epicyclic gear mechanism 10 in Fig.. 1). The sun gear 20 is rotatably supported in the circumferential direction with respect to a housing. In this embodiment, as shown in Figs. 2 and 3, the input shaft 2 is attached to the sun gear 20 so that their rotation axes coincide.. And the sun gear 20 integrally rotates with the input shaft 2 when the input shaft 2 rotates.

As shown in Fig. 1, the ring gear 30 is a gear that is located outside of the sun gear 20 in the radial direction (more specifically, it is located at the most outside in the radial direction). This ring gear 30 is rotatably supported in the circumferential direction with respect to the housing.. In this embodiment, as shown in Figs.. 2 and 3, the output shaft 4 is attached to the ring gear 30 so that their rotation axes coincide. Moreover, the output shaft 4 integrally rotates with the ring gear 30 when the ring gear 30 rotates.

As shown in Fig. 1, the planet gears 40 are gears that are located between the sun gear 20 and the ring gear 30 in the radial direction, and the epicyclic gear mechanism 10 is provided with a plurality of planet gears 40. In this embodiment, as shown in Fig. 1, four planet gears 40, namely, a first planet gear 41, a second planet gear 42, a third planet gear 43, and a fourth planet gear 44 are provided at substantially equal interval (in other words, at substantially 90-degree interval) in the circumferential direction.. The order of the arrangement along the circumferential direction is first planet gear 41 → second planet gear 42 → third planet gear 43 → fourth planet gear 44.. Each of the planet gears 40 are meshed with the sun gear 20 and the ring gear 30. Consequently, the rotational force of the sun gear 20 which integrally rotates with the input shaft 2 is transmitted, via the planet gears 40, to the ring gear 30 which integrally rotates with the output shaft 4.

As shown in Fig. 1, the carrier 50 rotatively (that is, rotatably) supports each of the first planet gear 41, the second planet gear 42, the third planet gear 43, and the fourth planet gear 44. In the configuration of the epicyclic gear mechanism 10 itself, the carrier 50 can rotate in the circumferential direction, and consequently, the above plurality of planet gears 40 supported by the carrier 50 can also revolve.. However, the device 1 according to this embodiment is provided with a locking member that is not shown for locking the rotation of the carrier 50, and this locking member locks the rotation of the carrier 50 in the circumferential direction.. Therefore, as mentioned above, the carrier 50 in the device 1 cannot rotate, and consequently the plurality of the planet gears 40 also cannot revolve. That is to say, the four planet gears 40 can only rotate, out of rotating and revolving.

As shown in Fig 1, the carrier 50 according to this embodiment is partitioned into two members (a first carrier section 52 and a second carrier section 56). Moreover, the first carrier section 52 supports at least one planet gear 40 among the plurality of planet gears 40 (in this embodiment, it supports two planet gears 40 among the four planet gears 40, namely, the first planet gear 41 and the third planet gear 43), whereas the second carrier section 56 supports at least one other planet gear that is different from the mentioned at least one planet gear (in this embodiment, it supports the second planet gear 42 and the fourth planet gear 44, which are different from the first planet gear 41 and the third planet gear 43).

As shown in Figs. 1 and 3, the first carrier section 52 has a first planet gear support section 53, a third planet gear support section 54, and a depression 55.. The first planet gear support section 53 is arranged at the front side with respect to the direction from the first planet gear 41 to the third planet gear 43 (this direction is marked as mark X2 in Figs. 1 and 3) and is for supporting the first planet gear 41. The third planet gear support section 54 is arranged at the back side with respect to the direction X2 and is for supporting the third planet gear 43. The depression 55 is arranged between the first planet gear support section 53 and the third planet gear support section 54 with respect to the direction X2..

And a second carrier section 56, which supports the second planet gear 42 and the fourth planet gear 44, is accommodated in the depression 55.. The depression 55 has two lateral faces 55a and 55b extending in a direction intersecting the direction X2 (this direction is marked as X3 in Figs. 1 and 2, and it is the direction from the second planet gear 42 to the fourth planet gear 44). Gaps S are arranged between the lateral face 55a and an opposing face 56a of the second carrier section 56 that opposes the lateral face 55a in the direction X2, and between the lateral face 55b and an opposing face 56b of the second carrier section 56 that opposes the lateral face 55b in the direction X2 (see Fig. 1). As shown in Figs. 2 and 3, holes 55c and 56c for passing through the sun gear 20 are provided in the depression 55 of the first carrier section 52, and in the second carrier section 56 respectively.. In the second carrier section 56, a second planet gear support section 56d for supporting the second planet gear 42 is located at the front side with respect to the direction X3 as seen from the hole 56c, and a fourth planet gear support section 56e for supporting the fourth planet gear 44 is located at the back side with respect to the direction X3 as seen from the hole 56c. Moreover, a rear face 56f of the second carrier section 56 accommodated in the depression 55 contacts the bottom face 55d of the depression 55.

The screws 60 are adjusting members for adjusting the relative positional relationship between the first carrier section 52 and the second carrier section 56 in the circumferential direction.. The screws 60 are operated by the person performing the adjustment of the relative positional relationship when performing the adjustment. That is to say, as mentioned above, gaps S are provided at two locations between the first carrier section 52 and the second carrier section 56, and the sun gear 20 passes through the hole 55c in the first carrier section 52 and the hole 56c in the second carrier section 56. Therefore, the carrier 50 of this embodiment has a configuration in which the relative positional relationship between the first carrier section 52 and the second carrier section 56 in the circumferential direction can be changed (in other words, the second carrier section 56 is relatively rotatable with respect to the first carrier section 52). Moreover, the screws 60 are provided extending across the first carrier section 52 and the second carrier section 56, and when the screws 60 are tightened, the first carrier section 52 and the second carrier section 56 move in the circumferential direction. Thus, an adjustment of the relative positional relationship between the first carrier section 52 and the second carrier section 56 in the circumferential direction is performed.

Here, the purpose of the adjustment of the relative positional relationship between the first carrier section 52 and the second carrier section 56 in the circumferential direction is explained with reference to Figs.. 4 and 5.

Fig.. 4 is a schematic diagram showing the state of the epicyclic gear mechanism 10 prior to the adjustment. As the schematic diagram, Fig 4 shows an overall view and an enlarged view of the two circled locations shown in the overall view (referred to as an "upper enlarged view" and a "lower enlarged view" as a matter of convenience). In the epicyclic gear mechanism 10 according to Fig 4, as it is clear from the overall view of Fig.. 4, the lateral face 55a (the lateral face 55b) of the above-described depression 55 is substantially parallel to the opposing face 56a (the opposing face 56b) of the above-described second carrier section 56 (in other words, the width of the gaps S is substantially the same at any location in the direction X3). And in the epicyclic gear mechanism 10 according to Fig.. 4, as shown in the enlarged view of Fig. 4, the tooth faces of the sun gear 20 do not contact the tooth faces of the planet gears 40 (see lower enlarged view of Fig. 4), and also the tooth faces of the ring gear 30 do not contact the tooth faces of the planet gears 40 (see upper enlarged view of Fig. 4). Consequently, in the epicyclic gear mechanism 10, there is a possibility that the ring gear 30 (the output shaft 4 attached to the ring gear 30) rotates in the circumferential direction (the clockwise or counterclockwise direction in Fig. 4), even if the position of the sun gear 20 (the input shaft 2 attached to the sun gear 20) is determined.. That is to say, the problem may occur that the rotational position of the output shaft 4 cannot be controlled exactly (with high accuracy), for example, the problem that the output shaft 4 cannot be accurately positioned even if the input shaft 2 is positioned..

An adjustment of the relative positional relationship between the first carrier section 52 and the second carrier section 56 in the circumferential direction is performed in order to solve this problem. Fig. 5 is a schematic view showing the state of the epicyclic gear mechanism 10 after the adjustment. As the schematic diagram, Fig. 5 shows an overall view and an enlarged view of the circled location described in the overall view. When the screws 60 are operated in order to adjust the relative positional relationship, the relative positional relationship between the first carrier section 52 and the second carrier section 56 in the circumferential direction changes, and the epicyclic gear mechanism 10 will be in a state shown in Fig.. 5, for example (how the relative positional relationship changes due to how the screws 60 are operated is explained later)

As it can be understood by focusing attention on the gaps S shown in Fig. 5, the state shown in Fig. 5 is the state in which the first carrier section 52 slightly rotates in the counterclockwise circumferential direction (such circumferential direction is referred to as a circumferential direction X1), and the second carrier section 56 slightly rotates in the clockwise circumferential direction (that is, the direction opposite to the circumferential direction X1) from the state shown in Fig. 4. Then, in the epicyclic gear mechanism 10 according to Fig.. 5, the tooth faces of the sun gear 20 on the downstream side in the circumferential direction X1 and the tooth faces of the ring gear 30 on the downstream side in the circumferential direction X1 contact with the tooth faces of the fourth planet gear 44, whereas the tooth faces of the sun gear 20 on the upstream side in the circumferential direction X1 and the tooth faces of the ring gear 30 on the upstream side in the circumferential direction X1 contact with the tooth faces of the third planet gear 43, as shown in the enlarged view of Fig. 5. Due to this, the ring gear 30 (the output shaft 4 attached to the ring gear 30) does not rotate in the circumferential direction when the sun gear 20 (the input shaft 2 attached to the sun gear 20) is positioned in the epicyclic gear mechanism 10. That is to say, by performing the above-described adjustment of the relative positional relationship, the problem that the rotational position of the output shaft 4 cannot be controlled exactly (with high accuracy), for example, the problem that the output shaft 4 cannot be accurately positioned even if the input shaft 2 is positioned can be appropriately solved.

It should be noted that, even though it is not shown in the enlarged view in Fig.. 5, in the epicyclic gear mechanism 10 according to Fig.. 5 the tooth faces of the sun gear 20 on the downstream side in the circumferential direction X1 and the tooth faces of the ring gear 30 on the downstream side in the circumferential direction X1 contact the tooth faces of the second planet gear 42, whereas the tooth faces of the sun gear 20 on the upstream side in the circumferential direction X1 and the tooth faces of the ring gear 30 on the upstream side in the circumferential direction X1 contact the tooth faces of the first planet gear 41. This also adequately solves the problem that the rotational position of the output shaft 4 cannot be exactly controlled (with high accuracy).

The following is an explanation of the specific configuration of the screws 60.. As shown in Fig. 1, the epicyclic gear mechanism 10 according to this embodiment has four screws 60 (a first screw 61, a second screw 62, a third screw 63, and a fourth screw 64).

The first screw 61 is positioned between the first planet gear 41 and the second planet gear 42 in the circumferential direction, and it is inserted into a first screw hole 71 provided extending across the first carrier section 52 and the second carrier section 56, the insertion direction extending along the direction X2. By tightening the first screw 61, the first carrier section 52 and the second carrier section 56 move in the circumferential direction so that the first planet gear 41 and the second planet gear 42 approach one another in the circumferential direction..

The second screw 62 is positioned between the third planet gear 43 and the fourth planet gear 44 in the circumferential direction, and it is inserted into a second screw hole 72 that is provided extending across the first carrier section 52 and the second carrier section 56, the insertion direction extending along the direction opposite to the direction X2. By tightening the second screw 62, the first carrier section 52 and the second carrier section 56 move in the circumferential direction so that the third planet gear 43 and the fourth planet gear 44 approach one another in the circumferential direction.

The third screw 63 is positioned between the second planet gear 42 and the third planet gear 43 in the circumferential direction, and it is inserted into a third screw hole 73 provided extending across the first carrier section 52 and the second carrier section 56, the insertion direction extending along the direction opposite to the direction X2. By tightening the third screw 63, the first carrier section 52 and the second carrier section 56 move in the circumferential direction so that the second planet gear 42 and the third planet gear 43 approach one another in the circumferential direction.

The fourth screw 64 is positioned between the fourth planet gear 44 and the first planet gear 41 in the circumferential direction, and it is inserted into a fourth screw hole 74 provided extending across the first carrier section 52 and the second carrier section 56, the insertion direction extending along the direction X2. By tightening the fourth screw 64, the first carrier section 52 and the second carrier section 56 move in the circumferential direction so that the second planet gear 42 and the third planet gear 43 approach one another in the circumferential direction..

As shown in Fig. 1, in this embodiment, the third screw 63 is positioned on a line extending from the first screw 61, and the third screw hole 73 is in communication with the first screw hole 71. Similarly, the fourth screw 64 is positioned on a line extending from the second screw 62, and the fourth screw hole 74 is in communication with the second screw hole 72..

In order to adjust the relative positional relationship (to shift the state of the epicyclic gear mechanism 10 from the state shown in Fig. 4 to the state shown in Fig. 5), the first screw 61 and the second screw 62 are tightened while the third screw 63 and the fourth screw 64 are loosened.. When this operation is continued, the first carrier section 52 gradually rotates in the counterclockwise circumferential direction X1 and the second carrier section 56 gradually rotates in the clockwise circumferential direction (that is, the direction opposite to the circumferential direction X1), and the first planet gear 41 and the second planet gear 42 approach one another in the circumferential direction, and the third planet gear 43 and the fourth planet gear 44 approach one another in the circumferential direction. This operation ends when the tooth faces of the sun gear 20 on the upstream side in the circumferential direction X1 and the tooth faces of the ring gear 30 on the upstream side in the circumferential direction X1 contact with the tooth faces of the first planet gear 41, when the tooth faces of the sun gear 20 on the downstream side in the circumferential direction X1 and the tooth faces of the ring gear 30 on the downstream side in the circumferential direction X1 contact with the tooth faces of the second planet gear 42, when the tooth faces of the sun gear 20 on the upstream side in the circumferential direction X1 and the tooth faces of the ring gear 30 on the upstream side in the circumferential direction X1 contact with the tooth faces of the third planet gear 43, and when the tooth faces of the sun gear 20 on the downstream side in the circumferential direction X1 and the tooth faces of the ring gear 30 on the downstream side in the circumferential direction X1 contact with the tooth faces of the fourth planet gear 44 (that is, when the state of the epicyclic gear mechanism 10 has shifted to the state shown in Fig.. 5). More specifically, for example, an adjustment of the relative positional relationship can be accomplished in this way.

### Advantageous Effects of the Epicyclic Gear Mechanism 10 According to the Present Embodiment

As explained above, in the epicyclic gear mechanism 10 according to this embodiment, the carrier 50 includes the first carrier section 52 supporting at least one planet gear 40 among a plurality of planet gears 40, and the second carrier section 56 supporting at least one other planet gear 40 different from the at least one planet gear 40. Further, the screws 60 are provided as adjustment members for adjusting the relative positional relationship between the first carrier section 52 and the second carrier section 56 in the circumferential direction. Thus, it is possible to achieve an epicyclic gear mechanism 10 which appropriately allows for high accuracy of the device 1.

That is to say, as explained in the Background Art section, in the epicyclic gear mechanism 10 a so-called backlash (play between the tooth faces of two gears) may occur at sections where the sun gear 20 meshes with the planet gears 40, and sections where the planet gears 40 mesh with the ring gear 30. Moreover, as described with respect to Fig. 4 and the explanation regarding the purpose of adj usting the relative positional relationship, this backlash may cause, for example, the problem that the rotational position of the output member (for example, the output shaft 4) attached to the epicyclic gear mechanism 10 of the device 1, which includes the epicyclic gear mechanism 10, cannot be exactly controlled (with high accuracy). Due to this problem, a harmful effect and the like that the output shaft 4 cannot be accurately positioned may occur.

In contrast to this, in the epicyclic gear mechanism 10 according to this embodiment, the carrier 50 includes the first carrier section 52 supporting at least one planet gear 40 (for example, the third planet gear 43) among a plurality of planet gears 40, and the second carrier section 56 supporting at least one planet gear 40 (for example the fourth planet gear 44) that is different from the at least one planet gear 40.. Further, the screws 60 are provided as adjustment members for adjusting the relative positional relationship between the first carrier section 52 and the second carrier section 56 in the circumferential direction. Therefore, as described with respect to Fig.. 5 and the explanation regarding the purpose of adjusting the relative positional relationship, it is possible to adjust the relative positional relationship between the first carrier section 52 and the second carrier section 56 in the circumferential direction by operating the screws 60, and the problem that the rotational position of the output shaft 4 cannot be exactly controlled (with high accuracy), for example, the problem that the output shaft 4 cannot be accurately positioned is appropriately solved.

### Other Embodiments

In the foregoing, the epicyclic gear mechanism according to the present invention was explained based on the above embodiment, but the foregoing embodiment of the invention is merely for the purpose of elucidating the invention and is not to be interpreted as limiting the invention. The invention can of course be altered and improved without departing from the gist thereof and includes functional equivalents..

In the foregoing embodiment, the adjustment of the relative positional relationship is finished when the tooth faces of the sun gear 20 and the tooth faces of the ring gear 30 come into contact with the tooth faces of all four planet gears, but there is no limitation to this. For example, it is possible that the adjustment is finished when the tooth faces of the sun gear 20 and the tooth faces of the ring gear 30 contact with the tooth faces of the first planet gear 41 and the second planet gear 42, it is possible that the adjustment is finished when the tooth faces of the sun gear 20 and the tooth faces of the ring gear 30 contact with the tooth faces of the third planet gear 43 and the fourth planet gear 44, it is possible that the adjustment is finished when the tooth faces of the sun gear 20 and the tooth faces of the ring gear 30 contact with the tooth faces of the first planet gear 41 and the fourth planet gear 44, and it is possible that the adjustment is finished when the tooth faces of the sun gear 20 and the tooth faces of the ring gear 30 contact with the tooth faces of the second planet gear 42 and the third planet gear 43. In each of these cases, when the sun gear 20 (the input shaft 2 attached to the sun gear 20) is positioned, the ring gear 30 (the output shaft 4 attached to the ring gear 30) does not rotate in the circumferential direction, therefore, the problem that the rotational position of the output shaft 4 cannot be exactly controlled (with high accuracy), for example, the problem that the output shaft 4 cannot be accurately positioned even if the input shaft 2 is positioned, is appropriately solved.

Moreover, it is not an essential condition that when the relative positional relationship is adjusted and the sun gear 20 (the input shaft 2 attached to the sun gear 20) is positioned, the ring gear 30 (the output shaft 4 attached to the ring gear 30) is put into a state in which it does not rotate at all.. That is to say, it is also possible to adjust the relative positional relationship in order to reduce the range in which the ring gear 30 (the output shaft 4 attached to the ring gear 30) can rotate when the sun gear 20 (the input shaft 2 attached to the sun gear 20) is positioned. Consequently, during the adjustment, the tooth faces of the sun gear 20 and the tooth faces of the ring gear 30 do not necessarily have to be brought into contact with the tooth faces of the planet gears 40..

Furthermore, in the foregoing embodiment, when adjusting the relative positional relationship, the first screw 61 and the second screw 62 are tightened while the third screw 63 and the fourth screw 64 are loosened, but there is no limitation to this. For example, it is also possible to tighten the third screw 63 and the fourth screw 64 while the first screw 61 and the second screw 62 are loosened..

Moreover, only four planet gears 40 are provided as the plurality of planet gears in the epicyclic gear mechanism 10 of the foregoing embodiment, but there is no limitation to this, and the other examples described below are possible. For example, it is possible to provide only two planet gears, in which one planet gear is supported by the first carrier section and the other planet gear is supported by the second carrier section. Moreover, it is possible to provide only three planet gears, in which one planet gear is supported by the first carrier section and the other two planet gears are supported by the second carrier section. Furthermore, it is possible to provide only five planet gears, in which three planet gears are supported by the first carrier section and the other two planet gears are supported by the second carrier section.

Further, the epicyclic gear mechanism may have a plurality of sets of the first carrier section and the second carrier section. For example, each of the first carrier section of the first set, the second carrier section of the first set, the first carrier section of the second set, and the second carrier section of the second set may support one planet gear (that is, the epicyclic gear mechanism may be provided with four planet gears, each carrier section supporting one of the planet gears).

Moreover, the epicyclic gear mechanism 10 according to the foregoing embodiment includes at least four planet gears as the plurality of planet gears 40, namely the first planet gear 41, the second planet gear 42, the third planet gear 43, and the fourth planet gear 44, which are arranged in the order of the first planet gear 41, the second planet gear 42, the third planet gear 43, and the fourth planet gear 44 in the circumferential direction, the first planet gear 41 and the third planet gear 43 being supported by the first carrier section 52, and the second planet gear 42 and the fourth planet gear 44 being supported by the second carrier section 56, but there is no limitation to this.. For example, it is also possible that the epicyclic gear mechanism includes at least four planet gears, as the plurality of planet gears, namely the first planet gear, the second planet gear, the third planet gear, and the fourth planet gear, which are arranged in the order of the first planet gear, the second planet gear, the third planet gear, and the fourth planet gear in the circumferential direction, and the first planet gear and the second planet gear are supported by the first carrier section, and the third planet gear and the fourth planet gear are supported by the second carrier section.

However, in the epicyclic gear mechanism 10 according to the foregoing embodiment, as described above, when the sun gear 20 (the input shaft 2 attached to the sun gear 20) has been positioned, the action due to the combination of the third planet gear 43 and the fourth planet gear 44 ensures that the ring gear 30 (the output shaft 4 attached to the ring gear 30) does not rotate in the circumferential direction, and furthermore, also the combination of the first planet gear 41 and the second planet gear 42 ensures that the ring gear 30 (the output shaft 4 attached to the ring gear 30) does not rotate in the circumferential direction. Consequently, the problem that the rotational position of the output shaft 4 cannot be exactly controlled (with high accuracy) can be solved more certainly.. In this respect, the foregoing embodiment is preferable..

Furthermore, the epicyclic gear mechanism 10 according to the foregoing embodiment has only four planet gears, as the plurality of planet gears 40, namely, the first planet gear 41, the second planet gear 42, the third planet gear 43, and the fourth planet gear 44, and the first carrier section 52 includes the first planet gear support section 53 that is arranged at the front side with respect to the direction from the first planet gear 41 to the third planet gear 43, the third planet gear support section 54 that is arranged at the back side with respect to the direction, and the depression 55 in which the second carrier section 56, that supports the second planet gear 42 and the fourth planet gear 44, is accommodated and is arranged between the first planet gear support section 53 and the third planet gear support section 54 with respect to the direction. But the configuration according to the first carrier section and the second carrier section of the epicyclic gear mechanism is not limited to this.

However, in the respect that the configuration is simple, the foregoing embodiment is preferable.

Moreover, in the foregoing embodiment, the adjustment members are screws 60 extending across the first carrier section 52 and the second carrier section 56, and by tightening the screws 60, the first carrier section 52 and the second carrier section 56 move in the circumferential direction, but there is no limitation to this. For example, it is also possible to use spacers inserted into the gaps S as the adjustment members for moving the first carrier section and the second carrier section in the circumferential direction.

However, in the respect that the user can easily perform the adjustment, the foregoing embodiment is preferable..

Moreover, the epicyclic gear mechanism 10 according to the foregoing embodiment includes, as the screws 60, the first screw 61 that is positioned between the first planet gear 41 and the second planet gear 42 with respect to the circumferential direction, and the second screw 62 positioned between the third planet gear 43 and the fourth planet gear 44 with respect to the circumferential direction. By tightening the first screw 61, the first carrier section 52 and the second carrier section 56 move so that the first planet gear 41 and the second planet gear 42 approach one another in the circumferential direction, and by tightening the second screw 62, the first carrier section 52 and the second carrier section 56 move so that the third planet gear 43 and the fourth planet gear 44 approach one another in the circumferential direction, but there is no limitation to this.. For example, it is possible that only the first screw is provided..

As it can be understood from Figs.. 4 and 5, by operating only the first screw, the first carrier section 52 rotates in the counterclockwise circumferential direction X1, and the second carrier section 56 rotates in the clockwise circumferential direction, and therefore, the adjustment of the relative positional relationship is possible.. However, if the adjustment is to be performed so that the tooth faces of the sun gear and the tooth faces of the ring gear contact the tooth faces of all four planet gears, due to manufacturing errors of the epicyclic gear mechanism, a situation may occur in which only the tooth faces of the first planet gear and the second planet gear contact with the tooth faces of the sun gear and the tooth faces of the ring gear, whereas the tooth faces of the third planet gear and the fourth planet gear do not contact with the tooth faces of the sun gear and the tooth faces of the ring gear, for example.. In such a case, if the second screw 62 is provided as well as the first screw 61, by operating the second screw 62, the tooth faces of the third planet gear 43 and the fourth planet gear 44 can be brought into contact with the tooth faces of the sun gear 20 and the tooth faces of the ring gear 30 without exerting a large influence on the contacting state of the tooth faces of the first planet gear 41 and the second planet gear 42. Thus, in the respect that fine adjustment of the relative positional relationship is possible, the foregoing embodiment is preferable.

In addition to the first screw 61 and the second screw 62, the epicyclic gear mechanism 10 according to the foregoing embodiment is further provided with the third screw 63 and the fourth screw 64, so that finer adjustment is possible (for example, it is possible to choose either an adjustment method in which the first screw 61 and the second screw 62 are tightened while the third screw 63 and the fourth screw 64 are loosened, or an adjustment method in which the third screw 63 and the fourth screw 64 are tightened while the first screw 61 and the second screw 62 are loosened).

In the foregoing embodiment, the epicyclic gear mechanism 10 has the star type configuration, but there is no limitation to this, and naturally the present invention can also be applied to an epicyclic gear mechanism having a planetary or a solar-type configuration.

## Claims

1. An epicyclic gear mechanism comprising:
a sun gear;
a ring gear positioned outside of the sun gear, with respect to a radial direction of the sun gear;
a plurality of planet gears positioned between the sun gear and the ring gear with respect to the radial direction, each of the plurality of planet gears meshing with the sun gear and the ring gear;
a carrier rotatably supporting the plurality of planet gears, the carrier having a first carrier section supporting at least one planet gear of the plurality of planet gears, and a second carrier section supporting another at least one planet gear that is different from the at least one planet gear; and
an adjustment member for adjusting a relative positional relationship in a circumferential direction between the first carrier section and the second carrier section..

2. An epicyclic gear mechanism according to claim 1,
wherein, as the plurality of planet gears, at least four planet gears are included, the four planet gears being a first planet gear, a second planet gear, a third planet gear, and a fourth planet gear, the four planet gears being arranged in the order of the first planet gear, the second planet gear, the third planet gear, and the fourth planet gear along the circumferential direction, the first planet gear and the third planet gear being supported by the first carrier section, the second planet gear and the fourth planet gear being supported by the second carrier section.

3. An epicyclic gear mechanism according to claim 2,
wherein, as the plurality of planet gears, only the four planet gears are included, the four planet gears being the first planet gear, the second planet gear, the third planet gear, and the fourth planet gear,
wherein the first carrier section includes
a first planet gear support section arranged at a front side with respect to a direction from the first planet gear to the third planet gear,
a third planet gear support section arranged at a back side with respect to that direction, and
a depression arranged between the first planet gear support section and the third planet gear support section with respect to that direction, the depression accommodating the second carrier section that supports the second planet gear and the fourth planet gear.

4. An epicyclic gear mechanism according to claim 3,
wherein the adjustment member is a screw that is provided extending across the first carrier section and the second carrier section,
wherein the first carrier section and the second carrier section are moved in the circumferential direction by the screw being tightened.

5. An epicyclic gear mechanism according to claim 4,
wherein, as the screw, a first screw that is positioned between the first planet gear and the second planet gear in the circumferential direction, and a second screw that is positioned between the third planet gear and the fourth planet gear in the circumferential direction are included,
wherein the first carrier section and the second carrier section as well as the first planet gear and the second planet gear are moved toward each other in the circumferential direction by the first screw being tightened, and
wherein the first carrier section and the second carrier section as well as the third planet gear and the fourth planet gear are moved toward each other in the circumferential direction by the second screw being tightened..
